# EUROPÄISCHE PATENTSCHRIFT

(11) **EP 3 172 634 B1**
(45) Veröffentlichungstag und Bekanntmachung des Hinweises auf die Patenterteilung: **22.05.2019**
(21) Anmeldenummer: 15766740.3
(22) Anmeldetag: 30.06.2015
(51) Int. Cl.: G05D 7/06, G05D 16/06, G05D 7/01, F24D 19/10

(54) **REGELARMATUR**
REGULATING VALVE
ROBINET DE RÉGULATION

(30) Priorität: 25.07.2014 DE 102014110550
(43) Veröffentlichungstag der Anmeldung: 31.05.2017
(73) Patentinhaber: Oventrop GmbH & Co. KG, 59939 Olsberg (DE)
(72) Erfinder: LÖFFLER, Gerhard, 59939 Olsberg (DE)
(74) Vertreter: Köchling, Conrad-Joachim
(86) Internationale Anmeldenummer: PCT/DE2015/100267
(87) Internationale Veröffentlichungsnummer: WO 2016/012000

(56) Entgegenhaltungen:
- EP-A1- 0 911 714
- EP-B1- 2 271 969
- DE-A1- 3 741 676

## Beschreibung

Die Erfindung betrifft eine Regelarmatur zur Regelung der Durchflussmenge und/oder des Differenzdruckes in flüssigkeitsführenden Heizungs- oder Kühlanlagen, bestehend aus einem Gehäuse mit mindestens einem Einlass und mindestens einem Auslass für die Flüssigkeit sowie einem dazwischen angeordneten Anschlussstutzen mit darin eingesetzter Regeleinrichtung, erster Durchflussreguliereinrichtung und zweiter Durchflussreguliereinrichtung, wobei der Anschlussstutzen oder daran angeordnete Teile einerseits Anschlussgeometrien für einen auf die erste Durchflussreguliereinrichtung wirkenden Stellantrieb und andererseits Anschlussgeometrien für ein auf die zweite Durchflussreguliereinrichtung wirkendes Betätigungsmittel aufweist, das manuell betätigbar ist, und wobei die Regeleinrichtung den Differenzdruck über die erste Durchflussreguliereinrichtung und die zweite Durchflussreguliereinrichtung konstant hält. Eine derartige Regelarmatur ist beispielsweise aus der EP 2 271 969 B1 bekannt. Bei der bekannten Regelarmatur ist die konstruktive Lösung derartig vorgesehen, dass in Fließrichtung der Flüssigkeit vom Einlass her in einer kartuschenähnlichen Einheit zunächst die Regeleinrichtung mit einem hülsenförmigen Drosselkörper, anschließend eine Durchflusseinrichtung, auf die ein Stellantrieb wirken kann und dann eine mittels einer Handbetätigung einstellbare Durchflusseinrichtung angeordnet ist.

Bei solchen Armaturenkombinationen kann auch bei einem montierten Stellantrieb mittels einer nicht von dem Stellantrieb verdeckten Handhabe die ihm zugeordnete Durchflusseinrichtung verstellt werden. Dies ist ein maßgeblicher Vorteil.

Dieser Vorteil soll bei der Erfindung auch beibehalten werden.

Bei der Lösung gemäß Stand der Technik muss der gesamte Durchfluss der Flüssigkeit zunächst die Regeleinrichtung durchströmen, was einen durchmessergroßen Strömungskanal durch den hülsenförmig ausgebildeten Drosselkörper der Regeleinrichtung bedingt. Der hülsenförmige Drosselkörper ist am einen Ende von einer Membran umgeben, die in Teilen der kartuschenähnlichen Einheit eingespannt ist. Durch die Membran wird die Drucksteuerung des Drosselkörpers bewirkt. Bei dieser konstruktiven Lösung ist die wirksame Fläche, die im Wesentlichen von dem Membrandurchmesser und dem Innendurchmesser des hülsenförmigen Drosselkörpers bestimmt ist und auf die der Druck vor und hinter den beiden Durchflussreguliereinheiten wirken kann, verkleinert. Diese Fläche könnte nur dann vergrößert werden, wenn der Außendurchmesser des Armaturengehäuses erheblich vergrößert würde.

Die wirksame Fläche der Armaturenkombination wird zusätzlich dadurch eingeschränkt, dass die Regeleinrichtung in die gegenüber dem Gehäuse drehbar angeordnete Betätigungsspindel samt Ventilkörper und Ventilsitz integriert ist, was mindestens ein zusätzliches Bauteil zwischen dem Außendurchmesser der Membrane und dem Innendurchmesser des Gehäuses erfordert. Dieses zusätzliche Bauteil ist praktisch durch eine Wandung eines Einsatzes im Armaturengehäuse gebildet, welcher die Regelkomponenten aufnimmt.

Aus der EP 0 911 714 A1 ist ein Durchflussregelventil mit integriertem Druckregler bekannt, welches im Wesentlichen die oben beschriebenen Merkmale aufweist.

Ausgehend von diesem Stand der Technik liegt der Erfindung die Aufgabe zugrunde, eine kostengünstig zu fertigende Regelarmatur gattungsgemäßer Art zu schaffen, die bei relativ kleinen Gehäuseabmessungen einen großen Durchflussquerschnitt und eine große wirksame Fläche für die Regeleinrichtung aufweist, womit auch große auf die Regeleinrichtung wirkende Stellkräfte erzielt werden sollen.

Zur Lösung dieser Aufgabe schlägt die Erfindung vor, dass in Fließrichtung der durchströmenden Flüssigkeit dem Einlass folgend die erste Durchflussreguliereinrichtung, dieser folgend die zweite Durchflussreguliereinrichtung, dieser folgend die Regeleinrichtung und dieser folgend der Auslass vorgesehen ist, dass eine im Anschlussstutzen längsverschieblich angeordnete Spindel ein aus dem Anschlussstutzen vorragendes Betätigungsteil und mindestens ein an der Spindel befestigtes Drosselelement aufweist, welches Bestandteil der ersten Durchflussreguliereinrichtung ist, und dass die Spindel sowohl die Regeleinrichtung als auch die zweite Durchflussreguliereinrichtung axial durchgreift.

Gegenüber dem Stand der Technik ist die Anordnung der Regeleinrichtung und der Durchflussreguliereinrichtungen in ihrer Reihenfolge verändert, sodass gemäß der Erfindung in Fließrichtung durch die Regelarmatur zunächst der Einlass, dann die erste Durchflussreguliereinrichtung, dann die zweite Durchflussreguliereinrichtung und dann die Regeleinrichtung und anschließend der Auslass durchströmt wird. In Kombination damit, dass eine axiale im Anschlussstutzen der Armatur angeordnete Spindel ein aus dem Gehäuse ragendes, auf die erste Durchflussreguliereinrichtung wirkendes Betätigungsteil und mindestens ein an der Spindel befestigtes, als Bestandteil der ersten Durchflussreguliereinrichtung wirkendes Drosselelement aufweist und die Spindel sowohl die Regeleinrichtung als auch die zweite Durchflussreguliereinrichtung axial durchgreift, werden wesentliche Verbesserungen erzielt. Da der Spindeldurchmesser relativ klein ist und klein gewählt werden kann, kann sowohl ein großer Durchflussquerschnitt erreicht werden als auch eine große wirksame Fläche bezüglich der Regeleinrichtung, sodass auch große auf die Regeleinrichtung wirkende Stellkräfte realisiert werden können, ohne dass das Gehäuse vergrößert werden müsste. Vielmehr kann das Gehäuse schlankbauend ausgebildet sein und dennoch die verbesserte Funktion der Regeleinrichtung erreicht werden.

Eine bevorzugte Weiterbildung wird darin gesehen, dass die zweite Durchflussreguliereinrichtung aus einer im Gehäuse oder im Anschlussstutzen angeordneten ersten Scheibe mit mindestens einer ersten Durchflussöffnung und einer an dieser anliegenden, relativ zu dieser drehbaren zweiten Scheibe gebildet ist, die mindestens eine zweite Durchflussöffnung aufweist, wobei die Durchflussöffnungen eine sich überlappende, einstellbare Strömungsöffnung bilden.

Auch durch diese Ausgestaltung der zweiten Durchflussreguliereinrichtung wird der Durchflussquerschnitt durch das Gehäuse nicht beeinträchtigt, wobei zudem durch die Bauart der Durchflussreguliereinrichtung eine Bauart in kleinen Abmessungen erreicht wird.

Dies resultiert insbesondere aus der scheibenförmigen Ausbildung der die Durchflussöffnungen aufweisenden Elemente.

Bevorzugt ist dabei vorgesehen, dass die zweite Scheibe mit einem drehbar im Gehäuse oder im Anschlussstutzen gehaltenen Drehmitnehmer drehfest gekoppelt ist, der mit einer außenliegend am Gehäuse angeordneten Handhabe das manuell betätigbare Betätigungsmittel zum Einstellen der zweiten Durchflussreguliereinrichtung bildet.

Diese Ausgestaltung führt bei funktioneller Bauart zu einer gut zugänglichen und einfach betätigbaren Einstellmöglichkeit.

Des Weiteren ist bevorzugt vorgesehen, dass die Spindel im Gehäuse drehbar und längsverstellbar gelagert ist, wobei die Spindel die Regeleinrichtung abgedichtet durchgreift und an dieser längsverschieblich geführt ist, sowie die zweite Durchflussreguliereinrichtung mit Bewegungsspiel durchgreift und in dem Betätigungsmittel längsverschieblich geführt und/oder abgedichtet gehalten ist.

Auch hierdurch wird die schlanke Bauart der Regelarmatur gefördert.

Insbesondere ist bevorzugt vorgesehen, dass die Regeleinrichtung aus einem auf der Spindel axial beweglichen angeordneten Drosselkörper und einem gehäuseseitig gehaltenen Sitz für diesen besteht, wobei der Drosselkörper zum Sitz hin und von diesem weg begrenzt beweglich ist und damit der Strömungskanal durch die Regeleinrichtung in seinem Querschnitt veränderbar ist.

Zudem ist hierbei bevorzugt vorgesehen, dass der Drosselkörper mit einer Membran gekoppelt ist, deren außen umlaufende Membranwulst an einer Innenwand des Gehäuses oder des Anschlussstutzens flüssigkeitsdicht anliegt und/oder dicht gehalten ist.

Auch ist bevorzugt vorgesehen, dass der Drosselkörper der Regeleinrichtung eine Dichtung aufweist, die am Mantel oder Spindel dichtend anliegt.

Hiermit werden große bei dem Betrieb der Regelarmatur auf die Regeleinrichtung wirkende Stellkräfte realisiert, weil der Membranaußendurchmesser der äußeren Membranwulst so ausgeführt ist, dass er möglichst dem Innendurchmesser des Gehäuses oder des Anschlussstutzens entspricht und in bevorzugter Ausführung dichtend an ihm anliegt, wobei zusätzlich der Innendurchmesser des Drosselkörpers der Regeleinrichtung möglichst dem Außendurchmesser der Spindel entspricht und bevorzugt dichtend an dieser anliegend. Insgesamt wird hierdurch erreicht, dass die Regeleinrichtung eine große wirksame Fläche aufweist, auf deren Ober- beziehungsweise Unterseite der Druck des durchströmenden Mediums in Strömungsrichtung vor der ersten Durchflussreguliereinrichtung bzw. der Druck hinter der zweiten Reguliereinrichtung wirken kann, sodass hohe Stellkräfte generiert werden können.

Hierzu ist zudem förderlich, dass der Sitz der Regeleinrichtung und die mit der drehbaren zweiten Scheibe zusammenwirkende erste Scheibe einstückig ausgebildet sind.

Besonders bevorzugt ist zudem, dass der zwischen dem Einlass und der ersten Durchflussreguliereinheit anstehende Druck der durch die Regelarmatur strömenden Flüssigkeit über einen im Gehäuse und/oder Anschlussstutzen ausgebildeten ersten Druckkanal auf die eine Seite der Regeleinrichtung oder einer Membran dieser Regeleinrichtung geleitet ist und der zwischen der zweiten Durchflussreguliereinheit und der Regeleinrichtung anstehende Druck auf die andere Seite der Regeleinrichtung oder die Membran dieser Regeleinrichtung durch einen zweiten Druckkanal geleitet ist, wobei der zweite Druckkanal in einem Drosselkörper der Regeleinrichtung ausgebildet ist, der zwischen der zweiten Durchflussreguliereinheit und Membran angeordnet ist.

Ein Ausführungsbeispiel einer erfindungsgemäßen Regelarmatur ist in der Zeichnung dargestellt und im Folgenden näher beschrieben.

Es zeigt:
- Figur 1: eine erfindungsgemäße Regelarmatur im Zusammenbau im Mittellängsschnittgesehen;
- Figur 2: Bestandteile der zweiten Durchflussreguliereinrichtung in Explosionsdarstellung in Schrägansicht.

In der Zeichnung ist eine Regelarmatur 1 zur Regelung der Durchflussmenge und des Differenzdruckes in flüssigkeitsführenden Heizungs- oder Kühlanlagen gezeigt. Die Regelarmatur 1 besteht im Wesentlichen aus einem Gehäuse 2 mit einem Einlass 3 und einem Auslass 4 für das durchströmende Medium, sowie einem dazwischen angeordneten Anschlussstutzen 5. In den Anschlussstutzen ist eine Regeleinrichtung 9, eine erste Durchflussreguliereinrichtung 10 und eine zweite Durchflussreguliereinrichtung 11 eingesetzt. Der Anschlussstutzen 5 oder an diesem angeordnete Teile weisen Anschlussgeometrien 6 für einen auf die erste Durchflussreguliereinrichtung 10 wirkenden Stellantrieb auf. Im Ausführungsbeispiel ist auf das entsprechende Ende des Anschlussstutzens 5 eine Schutzkappe aufgesetzt, die vor der Inbetriebnahme abgenommen wird und anstelle dessen ein Stellantrieb befestigt wird. Andererseits weist der Anschlussstutzen 5 Anschlussgeometrien 7 für ein auf die zweite Durchflussreguliereinrichtung 11 wirkendes Betätigungsmittel 8 auf, welches manuell betätigbar ist. In an sich bekannter Weise hält die Regeleinrichtung 9 den Differenzdruck über die erste Durchflussgeliereinrichtung 10 und die zweite Durchflussreguliereinrichtung 11 konstant.

Erfindungsgemäß ist bei der gezeigten Regelarmatur in Fließrichtung der Flüssigkeit dem Einlass 3 folgend die erste Durchflussreguliereinrichtung 10 angeordnet, dieser folgend die zweite Durchflussreguliereinrichtung 11 und dieser wiederum folgend die Regeleinrichtung 9, an die letztlich der Auslass 4 anschließt.

Im Anschlussstutzen 5 ist eine längsverschieblich angeordnete Spindel 12 vorgesehen, die ein aus dem Anschlussstutzen 5 in der Zeichnung oben vorragendes Betätigungsteil 13 aufweist, auf welches ein Stellantrieb oder dergleichen aufgesetzt werden kann, um die Spindel in unterschiedliche Stellungen zu überführen. An der Spindel 12 ist ein Drosselelement 14 befestigt, welches Bestandteil der ersten Durchflussreguliereinrichtung 10 ist und gegen einen gehäusefesten Ventilsitz arbeitet, sodass eine entsprechende Durchflussöffnung bzw. ein Durchflussspalt kleiner oder größer gebildet werden kann.

Die Spindel 12 durchgreift sowohl die Regeleinrichtung 9 als auch die zweite Durchflussreguliereinrichtung 11.

Vorzugsweise ist die Spindel 12 koaxial zu dem Anschlussstutzen 5 ausgerichtet und angeordnet.

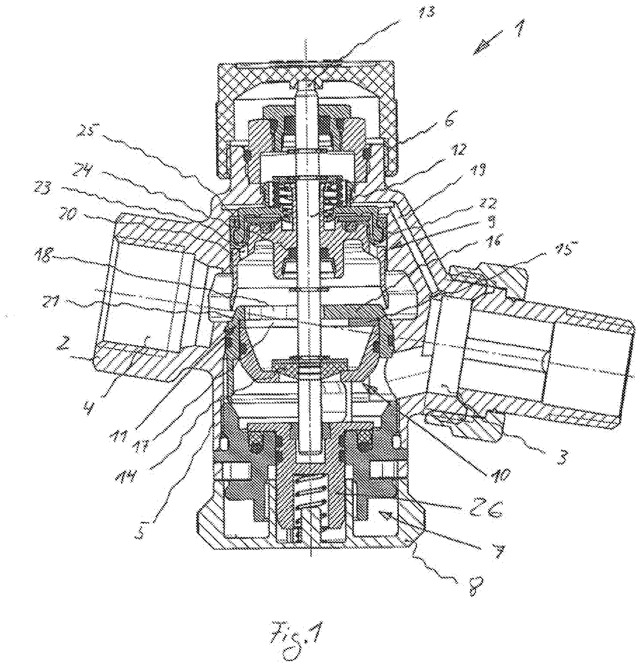

Die zweite Durchflussreguliereinrichtung 11 ist aus einer im Gehäuse 2 oder im Anschlussstutzen 5 angeordneten ersten Scheibe 16 mit mindestens einer ersten Durchflussöffnung 18 und einer an dieser anliegenden (in der Zeichnung gemäß Figur 1 von unten anliegenden) relativ zu dieser drehbaren zweiten Scheibe 15 gebildet, die eine zweite Durchflussöffnung 17 aufweist. Die Durchflussöffnungen 17,18 können sich überlappend eingestellt werden und so unterschiedliche Strömungsöffnungen bilden.

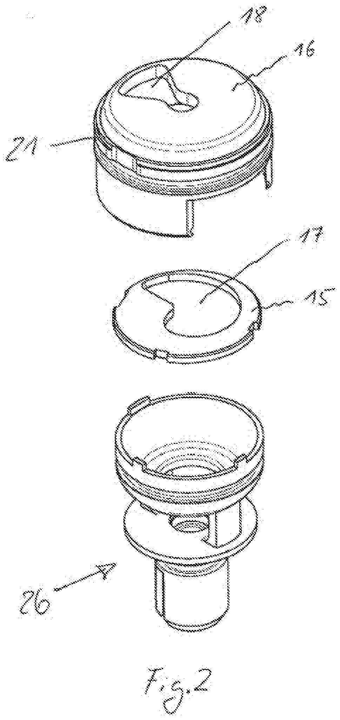

Diese Ausführungsform ist insbesondere in Figur 2 ersichtlich. Es wird hierdurch eine besonders flache Bauart erreicht.

Die zweite Scheibe 15 ist mit einem drehbar im Gehäuse 2 oder im Anschlussstutzen 5 gehaltenen Drehmitnehmer 26 drehfest gekoppelt. Dieser bildet mit einer außenliegend am Gehäuse 2 angeordneten Handhabe das manuell betätigbare Betätigungsmittel 8 zum Einstellen der zweiten Durchflussreguliereinrichtung 11, wie insbesondere in Figur 1 ersichtlich ist.

Die Spindel 12 ist im Gehäuse 2 drehbar und längsverstellbar gelagert, wobei die Spindel 12 die Regeleinrichtung 9 abgedichtet durchgreift und an dieser längsverschieblich geführt ist. Die zweite Durchflussreguliereinrichtung 11 wird ebenfalls von der Spindel 12, allerdings mit Bewegungsspiel durchgriffen. Schließlich ist das untere Ende der Spindel in dem Betätigungsmittel 8 längsverschieblich geführt und/oder abgedichtet gehalten, wie wiederum in Figur 1 gut ersichtlich ist.

Die Regeleinrichtung 9 besteht in wesentlichem aus einem auf der Spindel 12 axial beweglich angeordneten Drosselkörper 20 und einem gehäuseseitig gehaltenen Sitz 21 für diesen Drosselkörper 20, wobei der Drosselkörper 20 zum Sitz 21 hin und von diesem weg begrenzt beweglich ist, wodurch der Strömungskanal durch die Regeleinrichtung 9 in seinem Querschnitt veränderbar ist.

Der Drosselkörper 20 ist mit einer Membran 22 gekoppelt, deren außen umlaufende Membranwulst 25 an einer Innenwand des Gehäuses 2 oder des Anschlussstutzens 5 flüssigkeitsdicht anliegt oder dicht gehalten ist. Zusätzlich weist der Drosselkörper 20 der Regeleinrichtung 9 eine Dichtung 24 auf, die am Mantel der Spindel 12 dichtend anliegt.

Vorzugsweise ist der Sitz 21 der Regeleinrichtung 9 und die mit der drehbaren zweiten Scheibe 15 zusammenwirkende Scheibe 16 einstückig ausgebildet, wie in Figur 2 ersichtlich ist.

Bei der Regelarmatur 1 wird der zwischen dem Einlass 3 und der ersten Durchflussreguliereinheit 10 anstehende Druck über einen im Gehäuse 2 gebildeten ersten Druckkanal 19 auf die eine Seite und der zwischen zweiter Durchflussreguliereinheit 11 und der Regeleinrichtung 9 anstehende Druck über einen im Drosselkörper 20 gebildeten zweiten Druckkanal 23 auf die andere Seite der Membran 22 geleitet, sodass die Membran entsprechend mit Druck beaufschlagt ist und zur Verstellung des Drosselkörpers 20 betätigt, um bei Druckunterschieden eine entsprechende Beeinflussung des Durchflussspaltes zwischen Drosselkörper 20 und Sitz 21 zu bewirken.

Die Erfindung ist nicht auf das Ausführungsbeispiel beschränkt, sondern im Rahmen der Offenbarung vielfach variabel. Alle in der Beschreibung und/oder Zeichnung offenbarten Einzel- und Kombinationsmerkmale werden als erfindungswesentlich angesehen.

### Bezugszeichenliste:

- 1: Regelarmatur
- 2: Gehäuse
- 3: Einlass
- 4: Auslass
- 5: Anschlussstutzen
- 6: Anschlussgeometrien (für Stellantrieb)
- 7: Anschlussgeometrien (für Handbetätigung 8)
- 8: Handbetätigung (Betätigungsmittel)
- 9: Regeleinrichtung
- 10: erste Durchflussreguliereinrichtung
- 11: zweite Durchflussreguliereinrichtung
- 12: Spindel
- 13: Betätigungsteil (für 10)
- 14: Drosselelement
- 15: zweite Scheibe
- 16: erste Scheibe 11
- 17: zweite Durchflussöffnung in 15
- 18: erste Durchflussöffnung in 16
- 19: erster Druckkanal
- 20: Drosselkörper 9
- 21: Sitz 9
- 22: Membran
- 23: Zweiter Druckkanal
- 24: Dichtung an 20
- 25: äußerer Membranwulst
- 26: Drehmitnehmer

## Patentansprüche

1. Regelarmatur (1) zur Regelung der Durchflussmenge und/oder des Differenzdruckes in flüssigkeitsführenden Heizungs- oder Kühlanlagen, bestehend aus einem Gehäuse (2) mit mindestens einem Einlass (3) und mindestens einem Auslass (4) für die Flüssigkeit sowie einem dazwischen angeordneten Anschlussstutzen (5) mit darin eingesetzter Regeleinrichtung (9), erster Durchflussreguliereinrichtung (10) und zweiter Durchflussreguliereinrichtung (11), wobei der Anschlussstutzen (5) oder daran angeordnete Teile einerseits Anschlussgeometrien (6) für einen auf die erste Durchflussreguliereinrichtung (10) wirkenden Stellantrieb und andererseits Anschlussgeometrien (7) für ein auf die zweite Durchflussreguliereinrichtung (11) wirkendes Betätigungsmittel (8) aufweist, das manuell betätigbar ist, und wobei die Regeleinrichtung (9) den Differenzdruck über die erste Durchflussreguliereinrichtung (10) und die zweite Durchflussreguliereinrichtung (11) konstant hält, **dadurch gekennzeichnet, dass** in Fließrichtung der durchströmenden Flüssigkeit dem Einlass (3) folgend die erste Durchflussreguliereinrichtung (10), dieser folgend die zweite Durchflussreguliereinrichtung (11), dieser folgend die Regeleinrichtung (9) und dieser folgend der Auslass (4) vorgesehen ist, dass eine im Anschlussstutzen (5) längsverschieblich angeordnete Spindel (12) ein aus dem Anschlussstutzen (5) vorragendes Betätigungsteil (13) und mindestens ein an der Spindel (12) befestigtes Drosselelement (14) aufweist, welches Bestandteil der ersten Durchflussreguliereinrichtung (10) ist, und dass die Spindel (12) sowohl die Regeleinrichtung (9) als auch die zweite Durchflussreguliereinrichtung (11) axial durchgreift.

2. Regelarmatur nach Anspruch 1, **dadurch gekennzeichnet, dass** die zweite Durchflussreguliereinrichtung (11) aus einer im Gehäuse (2) oder im Anschlussstutzen (5) angeordneten ersten Scheibe (16) mit mindestens einer ersten Durchflussöffnung (18) und einer an dieser anliegenden, relativ zu dieser drehbaren zweiten Scheibe (15) gebildet ist, die mindestens eine zweite Durchflussöffnung (17) aufweist, wobei die Durchflussöffnungen (17,18) eine sich überlappende, einstellbare Strömungsöffnung bilden.

3. Regelarmatur nach Anspruch 2, **dadurch gekennzeichnet, dass** die zweite Scheibe (15) mit einem drehbar im Gehäuse (2) oder im Anschlussstutzen (5) gehaltenen Drehmitnehmer (26) drehfest gekoppelt ist, der mit einer außenliegend am Gehäuse angeordneten Handhabe das manuell betätigbare Betätigungsmittel (8) zum Einstellen der zweiten Durchflussreguliereinrichtung (11) bildet.

4. Regelarmatur nach einem der Ansprüche 1 bis 3, **dadurch gekennzeichnet, dass** die Spindel (12) im Gehäuse (2) drehbar und längsverstellbar gelagert ist, wobei die Spindel (12) die Regeleinrichtung (9) abgedichtet durchgreift und an dieser längsverschieblich geführt ist, sowie die zweite Durchflussreguliereinrichtung (11) mit Bewegungsspiel durchgreift und in dem Betätigungsmittel (8) längsverschieblich geführt und/oder abgedichtet gehalten ist.

5. Regelarmatur nach einem der Ansprüche 1 bis 4, **dadurch gekennzeichnet, dass** die Regeleinrichtung (9) aus einem auf der Spindel (12) axial beweglichen angeordneten Drosselkörper (20) und einem gehäuseseitig gehaltenen Sitz (21) für diesen besteht, wobei der Drosselkörper (20) zum Sitz (21) hin und von diesem weg begrenzt beweglich ist und damit der Strömungskanal durch die Regeleinrichtung (9) in seinem Querschnitt veränderbar ist.

6. Regelarmatur nach einem Anspruch 5, **dadurch gekennzeichnet, dass** der Drosselkörper (20) mit einer Membran (22) gekoppelt ist, deren außen umlaufende Membranwulst (25) an einer Innenwand des Gehäuses (2) oder des Anschlussstutzens (5) flüssigkeitsdicht anliegt und/oder dicht gehalten ist.

7. Regelarmatur nach einem Anspruch 5 oder Anspruch 6, **dadurch gekennzeichnet, dass** der Drosselkörper (20) der Regeleinrichtung (9) eine Dichtung (24) aufweist, die am Mantel oder Spindel (12) dichtend anliegt.

8. Regelarmatur nach einem der Ansprüche 5 bis 7, **dadurch gekennzeichnet, dass** der Sitz (21) der Regeleinrichtung (9) und die mit der drehbaren zweiten Scheibe (15) zusammenwirkende erste Scheibe (16) einstückig ausgebildet sind.

9. Regelarmatur nach einem der Ansprüche 1 bis 8, **dadurch gekennzeichnet, dass** der zwischen dem Einlass (3) und der ersten Durchflussreguliereinheit (10) anstehende Druck der durch die Regelarmatur (1) strömenden Flüssigkeit über einen im Gehäuse (2) und/oder Anschlussstutzen (5) ausgebildeten ersten Druckkanal (19) auf die eine Seite der Regeleinrichtung (9) oder einer Membran (22) dieser Regeleinrichtung (9) geleitet ist und der zwischen der zweiten Durchflussreguliereinheit (11) und der Regeleinrichtung (9) anstehende Druck auf die andere Seite der Regeleinrichtung (9) oder der Membran (22) dieser Regeleinrichtung (9) durch einen zweiten Druckkanal (23) geleitet ist, wobei der zweite Druckkanal (23) in einem Drosselkörper (20) der Regeleinrichtung (9) ausgebildet ist, der zwischen der zweiten Durchflussreguliereinheit (11) und Membran (22) angeordnet ist.

## Claims

1. A control valve assembly (1) for controlling the flow rate and/or the differential pressure in liquid-carrying heating or cooling systems, consisting of a housing (2) having at least one inlet (3) and at least one outlet (4) for the liquid and a connection port (5) disposed therebetween having a control device (9) fitted therein, a first flow control device (10) and a second flow control device (11), wherein the connection port (5) or parts arranged thereat, on one hand, include connection geometries (6) for an actuator acting on the first flow control device (10) and on the other hand, include connection geometries (7) for an actuating means (8) acting on the second flow control device (11), said actuating means (8) being manually operable, and wherein the control device (9) holds the differential pressure constant through the first flow control device (10) and the second flow control device (11), **characterized by that** in the flow direction of the flowing liquid are provided the inlet (3), then the first flow control device (10), then the second flow control device (11), then the control device (9), and then the outlet (4), that a spindle (12) disposed in the connection port (5) in a longitudinally displaceable manner includes an actuating part (13) projecting from the connection port (5) and at least one throttle element (14) attached at the spindle (12), said throttle element (14) being part of the first flow control device (10), and that the spindle (12) axially extends through the control device (9) as well as the second flow control device (11).

2. The control valve assembly of claim 1, **characterized by that** the second flow control device (11) is formed of a first disk (16) disposed in the housing (2) or in the connection port (5) and having at least one first flow opening (18), and a second disk (15) abutting the latter and being rotatable relative thereto, said second disk (15) including at least one second flow opening (17), wherein the flow openings (17, 18) form an overlapping, adjustable flow opening.

3. The control valve assembly of claim 2, **characterized by that** the second disk (15) is non-rotatably coupled to a rotational driver (26) rotatably held in the housing (2) or in the connection port (5), said rotational driver (26) forming, with a handle disposed outside at the housing, the manually operable actuating means (8) for adjusting the second flow control device (11).

4. The control valve assembly of one of claims 1 to 3, **characterized by that** the spindle (12) is rotatably and longitudinally displaceably supported in the housing (2), the spindle (12) extending through the control device (9) in a sealed manner and being longitudinally displaceably guided thereat, and extending with play through the second flow control device (11) and being longitudinally displaceably guided in the actuating means (8) and/or being held therein in a sealed manner.

5. The control valve assembly of one of claims 1 to 4, **characterized by that** the control device (9) consists of a throttle body (20) axially movably disposed on the spindle (12) and of a seat (21) therefor held at the housing side, the throttle body (20) being movable to a limited extent toward the seat (21) and away therefrom, and thus the cross-section of the flow channel being modifiable by the control device (9).

6. The control valve assembly of claim 5, **characterized by that** the throttle body (20) is coupled to a membrane (22), the peripheral bead (25) thereof resting against an inner wall of the housing (2) or of the connection port (5) in a liquid-proof manner and/or being held thereat in a sealed manner.

7. The control valve assembly of claim 5 or claim 6, **characterized by that** the throttle body (20) of the control device (9) includes a seal (24) that rests against the envelope or spindle (12) in a sealed manner.

8. The control valve assembly of one of claims 5 to 7, **characterized by that** the seat (21) of the control device (9) and the first disk (16) co-operating with the rotatable second disk (15) are formed as one piece.

9. The control valve assembly of one of claims 1 to 8, **characterized by that** the pressure of the liquid flowing through the control valve assembly (1) acting between the inlet (3) and the first flow control unit (10) is transferred via a first pressure channel (19) formed in the housing (2) and/or the connection port (5) to the one side of the control device (9) or a membrane (22) of said control device (9), and the pressure acting between the second flow control unit (11) and the control device (9) is transferred to the other side of the control device (9) or the membrane (22) of said control device (9) via a second pressure channel (23), the second pressure channel (23) being formed in a throttle body (20) of the control device (9) that is disposed between the second flow control unit (11) and the membrane (22).

## Revendications

1. Robinetterie de régulation (1) pour commander le débit et/ou la pression différentielle dans des systèmes de chauffage ou de refroidissement de transfert de liquide, consistant en un boîtier (2) ayant au moins une entrée (3) et au moins une sortie (4) pour le liquide et un embout de raccordement (5) disposé entre les deux et ayant un dispositif de régulation (9) prévu là-dedans, un premier dispositif de régulation du débit (10) et un deuxième dispositif de régulation du débit (11), l'embout de raccordement (5) ou des parties arrangées à celui-ci, d'un côté, comportant des géométries de raccordement (6) pour un actionneur agissant sur le premier dispositif de régulation du débit (10) et de l'autre côté, comportant des géométries de raccordement (7) pour un moyen d'actionnement (8) agissant sur le deuxième dispositif de régulation du débit (11), ce moyen d'actionnement (8) étant actionnable manuellement, et le dispositif de régulation (9) maintenant la pression différentielle constante par le premier dispositif de régulation du débit (10) et le deuxième dispositif de régulation du débit (11), **caractérisée en ce que** dans le sens de circulation du liquide passant sont prévus l'entrée (3), puis le premier dispositif de régulation du débit (10), puis le deuxième dispositif de régulation du débit (11), puis le dispositif de régulation (9), et puis la sortie (4), qu'une broche (12) disposée dans l'embout de raccordement (5) de façon déplaçable longitudinalement comporte une pièce d'actionnement (13) faisant saillie de l'embout de raccordement (5) et au moins un élément d'étranglement (14) attaché à la broche (12), cet élément d'étranglement (14) faisant partie du premier dispositif de régulation du débit (10), et que la broche (12) axialement traverse le dispositif de régulation (9) aussi bien que le deuxième dispositif de régulation du débit (11).

2. Robinetterie de régulation selon la revendication 1, **caractérisée en ce que** le deuxième dispositif de régulation du débit (11) est réalisé d'un premier disque (16) disposé dans le boîtier (2) ou dans l'embout de raccordement (5) et ayant au moins une première ouverture de passage (18), et un deuxième disque (15) étant en appui sur cette dernière et étant pivotant par rapport à celle-ci, ce deuxième disque (15) comportant au moins une deuxième ouverture de passage (17), les ouvertures de passage (17, 18) formant une ouverture de passage chevauchante, ajustable.

3. Robinetterie de régulation selon la revendication 2, **caractérisée en ce que** le deuxième disque (15) est lié solidaire en pivotement à un entraîneur rotatif (26) maintenu rotatif dans le boîtier (2) ou dans l'embout de raccordement (5), cet entraîneur rotatif (26) réalisant, avec une poignée disposée à l'extérieur du boîtier, le moyen d'actionnement (8) actionnable manuellement pour ajuster le deuxième dispositif de régulation du débit (11).

4. Robinetterie de régulation selon une des revendications 1 à 3, **caractérisée en ce que** la broche (12) est maintenue rotative et longitudinalement déplaçable dans le boîtier (2), la broche (12) traversant le dispositif de régulation (9) de façon étanchée et étant guidée longitudinalement déplaçable à celui-ci, et traversant avec jeu le deuxième dispositif de régulation du débit (11) et étant guidée longitudinalement déplaçable dans le moyen d'actionnement (8) et/ou étant maintenue là-dedans de façon étanchée.

5. Robinetterie de régulation selon une des revendications 1 à 4, **caractérisée en ce que** le dispositif de régulation (9) consiste en un corps d'étranglement (20) disposé axialement mobile sur la broche (12) et en une siège (21) pour celui-ci maintenue au côté du boîtier, le corps d'étranglement (20) étant mobile à un degré limité en rapprochement et en éloignement de la siège (21), et ainsi la section du canal de circulation étant modifiable par le dispositif de régulation (9).

6. Robinetterie de régulation selon la revendication 5, **caractérisée en ce que** le corps d'étranglement (20) est lié à une membrane (22), le bourrelet périphérique (25) de celle-ci étant en appui sur une paroi intérieure du boîtier (2) ou de l'embout de raccordement (5) de façon étanche aux liquides et/ou étant maintenu de façon étanchée à celle-ci.

7. Robinetterie de régulation selon la revendication 5 ou la revendication 6, **caractérisée en ce que** le corps d'étranglement (20) du dispositif de régulation (9) comporte un joint d'étanchéité (24) qui est en appui sur la chemise ou la broche (12) de façon étanchée.

8. Robinetterie de régulation selon une des revendications 5 à 7, **caractérisée en ce que** la siège (21) du dispositif de régulation (9) et le premier disque (16) co-opérant avec le deuxième disque (15) pivotant sont réalisés en une seule pièce.

9. Robinetterie de régulation selon une des revendications 1 à 8, **caractérisée en ce que** la pression du liquide circulant à travers la robinetterie de régulation (1) agissant entre l'entrée (3) et la première unité de régulation du débit (10) est transférée par l'intermédiaire d'un premier canal de pression (19) réalisé dans le boîtier (2) et/ou l'embout de raccordement (5) à l'un côté du dispositif de régulation (9) ou d'une membrane (22) de ce dispositif de régulation (9), et la pression agissant entre la deuxième unité de régulation du débit (11) et le dispositif de régulation (9) est transférée à l'autre côté du dispositif de régulation (9) ou de la membrane (22) de ce dispositif de régulation (9) par l'intermédiaire d'un deuxième canal de pression (23), le deuxième canal de pression (23) étant réalisé dans un corps d'étranglement (20) du dispositif de régulation (9) qui est disposé entre la deuxième unité de régulation du débit (11) et la membrane (22).
